# EUROPEAN PATENT APPLICATION

(11) **EP 1 059 760 A1**
(43) Date of publication of application: **13.12.2000**
(21) Application number: 98935435.2
(22) Date of filing: 19.06.1998
(51) Int. Cl.: H04L 9/00

(54) **METHOD FOR THE BLOCK-ENCRYPTION OF DISCRETE DATA**

(30) Priority: 24.02.1998 RU 98103646; 20.03.1998 RU 98104851; 22.04.1998 RU 98107784
(71) Applicant: Otkrytoe Aktsionernoe Obschestvo " Moskovskaya Gorodskaya Telefonnaya Set", Moscow, GSP 103804 (RU); Moldovyan, Alexandr Andreevich, Vsevolozhsk, 188710 (RU); Moldovyan, Nikolay Andreevich, Vsevolozhsk, 188710 (RU); Savlukov, Nikolai Viktorovich, Moscow, 127410 (RU)
(72) Inventor: MOLDOVYAN, Alexandr Andreevich, Vsevolozhsk, 188710 (RU); MOLDOVYAN, Nikolai Andreevich, Vsevolozhsk, 188710 (RU); SAVLUKOV, Nikolai Viktorovich, Moscow, 127410 (RU)
(74) Representative: Wardley, Diana Mary
(86) International application number: RU9800181
(87) International publication number: WO9944330

(57) **Abstract**

The present invention pertains to the field of electrical communication and computer technology, and more precisely, relates to cryptographic methods and devices for encryption of digital data. The method comprises forming an encryption key in the form of a set of subkeys, breaking down a data block into a number of subblocks N≥2, and alternate converting the subblocks by carrying out a dual-locus operation on a subblock and subkey. This method is characterised in that before carrying-out the dual-locus operation on the i-th subblock and subkey, a conversion operation depending on the j-th subblock is carried out on the subkey, where j≠i. This method is also characterised in that the conversion operation depending on the j-th subblock is a permutation operation on the subkey bits depending on the j-th subblock. This method is further characterised in that the conversion operation depending on the j-th subblock is a cyclic offsetting operation on the subkey bits depending on the j-th subblock. The method is finally characterised in that the conversion operation depending on the j-th subblock is a substitution operation carried out on the subkey according to the j-th subblock.

## Description

The present invention pertains to the field of electrical communication and computer technology and more precisely relates to cryptographic methods for encrypting messages (information).

### PRIOR ART

In the totality of features of the claimed method the following terms are used:
- secret key presents a bit combination known only to a legitimate user,
- encryption key is a bit combination used in encrypting data information signals; encryption key is encryption changeable element and is used for converting the given message or the given totality of messages; encryption key is formed according to determined procedures and the secret key; in a number of ciphers, the secret key as such is used;
-cipher is a totality of elementary steps of input data conversion using an encryption key; a cipher may be implemented as a computer program or as an individual electronic device;
- subkey is a portion of encryption key used at individual elementary encryption steps;
- ciphering is a process implementing a certain data conversion method using an encryption key translating the data into a cryptogram which is a pseudo-random character sequence from which it is practically impossible to obtain information without knowing the value of the encryption key;
- deciphering is a process which is reverse to ciphering procedure; deciphering ensures recovering information according to the cryptogram when the encryption key is known;
-cryptographic resistance is a measure of safety of information protection and represents labour intensity measured in the number of elementary operations to be performed in order to recover information according to the cryptogram when the conversion algorithm is known but without the knowledge of the encryption key.

Methods are known of block data encryption, see, e.g., the cipher RC5 [R.Rivest, The RC5 Encryption Algorithm, Fast Software Encryption, Second International Workshop Proceedings (Leuven, Belgium, December 14-16, 1994), Lecture Notes in Computer Science, v.1008, Springer-Verlag, 1995, pp.86-96]. In the known method, data block encryption is effected by generating an encryption key in the form of a totality of subkeys, splitting a converted data block into subblocks and alternate alteration of the latter using a cyclic offsetting operation, modulo 2 addition operation performed on two subblocks, and modulo 2³² addition operation performed on subblock and subkey. Here the subkeys are used according to a fixed schedule, i.e. at a given step of performing binary operation between the subblock and the subkey, the subkey value does not depend on the data input block. This method of block encryption provides high encryption rate when realised as a computer program.

However, this method fails to ensure sufficient resistance to differential and linear cryptanalysis [Kalisky B.S., Yin Y.L. On Differential and Linear Cryptanalysis of the RC5 Encryption Algorithm. Advances in Cryptology - CRYPTO'95 Proc., Springer-Verlag, 1995, pp.171-184], which is due to the fact that in this method, at given encryption steps, fixed subkeys for all possible input blocks are used.

The closest to the claimed block encryption method in its technical essence is a method described in US standard DES [National Bureau of Standards. Data Encryption Standard. Federal Information Proceedings Standard Publication 46, January 1977]. This method comprises generating an encryption key in the form of a set of 48-bit subkeys, breaking down an input block of discrete data into two 32-bit subblocks L and R and alternate converting the subblocks under the secret key control. In total, 16 rounds of the 32-bit data subblock are performed. Each subblock conversion round is carried out by performing the following procedures: (1) extending subblock R up to 48 bits by repeating certain bits of this subblock: R→R', (2) performing modulo 2 summation operation on the subblock and the subkey, (3) breaking down the subblock R' into eight 6-bit subblocks, (4) performing substitution operation on each 6-bit subblock by replacing 6-bit subblocks with 4-bit subblocks according to known substitution tables, (5) combining eight 4-bit subblocks into the 32-bit subblock 2, (6) carrying out the operation of R subblock bits permutation according to a determined law, (7) performing modulo 2 summation operation on of subblock R with subblock L. In performing the current encryption round, a fixed subkey is used for all possible data input blocks. The subkeys used in converting the subblocks are generated under the control of the 56-bit secret key. This method of information block encryption has a high conversion rate when implemented in the form of a specialised electronic circuitry.

However, this method has some disadvantages, namely, it has low encryption rate when implemented in software. In addition, this method uses a short 56-bit secret key which allows using powerful modern computers to uncover the secret key by selecting possible key values. This requires performing several encryption procedures using different secret keys which makes it difficult to obtain a high encryption rate even in the case of hardware implementation.

The basis of the invention is formed by the task of developing a method for the block encryption of discrete data wherein data subblock conversion would be effected so as to decrease the number of conversion operations accounted for one input data bit while simultaneously providing high cryptographic resistance resulting in an increased encryption rate.

### DISCLOSURE OF THE INVENTION

The above task is achieved by the fact that in the method for block encryption of discrete data, including generating an encryption key as a set of subkeys, breaking down the data block into N≥2 subblocks and alternate subblock conversion by performing a dual-locus operation on and subkey, the novel feature, according to the invention, is performing j-th subblock-dependent conversion operation, where j≠1, on the subkey, prior to carrying out the dual-locus operation on the i-th subblock and subkey.

Due to such solution, the subkey structure used at a given encryption step, depends on the data being converted and thus, at the given conversion step, different modified subkey values are used for different input blocks due to which high cryptographic resistance to differential cryptanalysis is provided while simultaneously reducing the number of encryption rounds resulting in increasing the rate of cryptographic conversion.

A novel feature is also the fact that as the j-th subblock-dependent conversion operation, a j-th subblock-dependent subkey bit permutation operation is employed.

Due to such solution, increased encryption rate is provided when the claimed method is realised in the form of electronic encryption devices.

A novel feature is also that the j-th subblock-dependent subkey bit cyclic offsetting operation is used as a j-th subblock-dependent conversion operation.

Due to such solution, increasing encryption rate is ensured when the claimed method is implemented as computer encryption software.

Further, the novel feature is that the j-th subblock-dependent permutation operation performed on the subkey is employed as a j-th subblock-dependent conversion operation.

Due to such solution, additional enhancing of encryption cryptographic resistance is provided, simultaneously ensuring a high encryption rate when the claimed method is implemented in the form of computer encryption software.

Below the essence of the claimed invention will be explained in more detail by its embodiments with references to accompanying drawings.

### BRIEF DESCRIPTION OF DRAWINGS

Fig.1 presents a generalised encryption diagram according to the claimed method.
Fig.2 presents a block diagram of an elementary controlled switch which is a basic element of controlled permutation block. When u=1, input bits are not permuted, i.e. output signals coincide with input signals. When u=0, input bits are permuted.
Fig.3 presents a table of input and output signals of the elementary controlled switch when a potential of the control signal is high.
Fig.4 presents a table of input and output signals of the elementary controlled switch when a potential of the control signal is low.
Fig.5 schematically presents the structure of the controlled permutation block consisting of a set of blocks of the same type, elementary switches which implements 2⁷⁹ different permutations of input bits depending on the value of the 79-bit control code.
Fig.6 presents a diagram of a simplified controlled permutation block.

### THE BEST EMBODIMENTS OF THE INVENTION

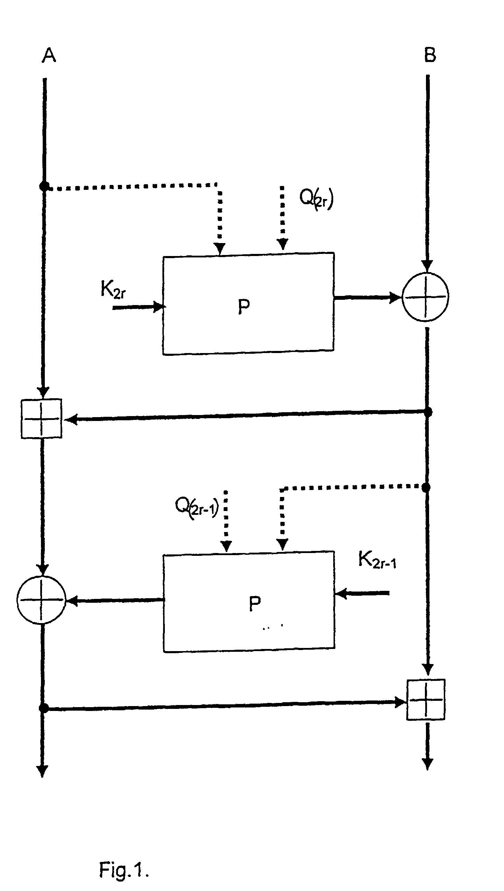

The invention is explained by means of a generalised diagram of data block cryptographic conversion based on the claimed method which is presented on Fig.1, where P is a block of controlled operation performed on a subkey; A and B are converted n-bit subblocks; K₂ᵣ, K ₂ᵣ₋₁ are m-bit subkeys (generally m≠n); Q(2r), Q(2r-1) are g-bit additional subkeys; sign "⊕" signifies modulo two bit-by-bit summation operation; sign "⊗" signifies modulo 2ⁿ summation operation. Bold solid lines signify an n-bit signal transmission bus, thin dotted lines signify transmission of one control bit. Bold dotted lines signify bus for transmitting n control signals as which converted subblock bits are used. The bold dotted lines also signify a bus for transmitting h bits of additional subkeys Q(2r) and Q(2r-1) which serve to modify the operation depending on the subblock being converted. In particular cases, additional subkeys may not be used.

Fig.1 shows a single (r-th) encryption round. Depending on a specific type of the controlled operation used and on the required conversion rate, from 6 to 10 and more rounds may be set. A single conversion round comprises carrying out the following sequence of procedures:
(1) converting subkey K₂ᵣ depending on the value of subblock A and on the value of additional subkey Q(2r) as a result of which the output of block P₁ generates a converted value of subkey P_{A, Q(2r)} (K₂ᵣ);
(2) converting subblock B by carrying out the modulo 2 bit-by-bit summation operation on the value of P_{A, Q(2r)} (K₂ᵣ) and subblock B: B:=B⊕P_{A, Q(2r)} (K₂ᵣ), where the sign ":=" signifies assignment operation:
(3) converting subblock A by performing modulo 2ⁿ summation operation on subblock A and Subblock B: A:=A⊗B;
(4) converting subkey K _{2R-1} depending on the value of subblock B and on the value of additional subkey Q(2r-1) as a result of which the output of block P₂ generates the value P_{A, Q(2r-1)} (K ₂ᵣ₋₁);
(5) converting subblock A:
   A:= A⊕P_{A, Q(2r-1)} (K ₂ᵣ₋₁);
(6) converting subblock B: B:= B⊗A.

Depending on particular embodiment of the proposed method for block encryption of discrete information, the same pair of m-bit subkeys K₂ and K₁ (additional g-bit subkeys Q(2) and Q(1)) may be used in carrying out each encryption round. An embodiment is possible when in each round independent subkeys K₂ᵣ and K₂ᵣ₋₁ (independent additional subkeys Q(2r) and Q(2r-1) are used. For example, when the number of rounds is r=3, the first round uses subkeys K₂ and K₁, (Q(2) and Q(1)), second round uses subkeys K₄ and K₃ (Q(4) and Q(3)), third round uses subkeys K₆ and K₅ (Q(6) and Q(5)). Subkeys K₂ᵣ, K₂ᵣ₋₁ and additional subkeys Q(2r), Q(2r-1) may be formed according to special procedures depending on the secret key. An embodiment is possible wherein subkeys K₂ᵣ, K ₂ᵣ₋₁ and additional subkeys Q(2r), Q(2r-1) are formed by random law generation.

Possibility of technical implementation of the claimed method is explained by the following its specific embodiments.

### Example 1.

This example explains encryption of 64-bit data blocks using controlled permutations as an operation performed on a subkey depending on one of blocks being converted. The encryption key is generated as 16 subkeys K₁, K₂, K₃,...K₁₆ each having a length of 32 bits. Additional subkeys are not employed. The data input block is broken down into two 32-bit subblocks A and B. Input block encryption is described by the following algorithm:
1. Set round number counter:
   r: =1.
2. Convert subblock B according to the expression:
   B: =B ⊕ P_{A} (K₂ᵣ),
   where P_{A} (K₂ᵣ) signifies the operation of permuting bits of subkey K2r performed depending of the value of subblock A.
3. Convert subblock A according to the expression:
   A: = A ⊗ B.
4. Convert subblock A according to the expression:
   A: = A ⊕ P_{B} (K ₂ᵣ₋₁),
   where P_{B} (K ₂ᵣ₋₁) signifies the operation of permuting bits of subkey K ₂ᵣ₋₁ performed depending on the value of subblock B.
5. Convert subblock B according to the expression:
   B: = B ⊗ A.
6. If r≠8, increment the counter r: =r+1 and move to step 2, otherwise STOP.

This algorithm is oriented to implementation in the form of electronic circuitry. The operations of subkey bit permutation depending on one of subblocks being converted may be carried out using a controlled permutation block realised based on the use of a set of elementary switches which perform an operation of permuting two bits.

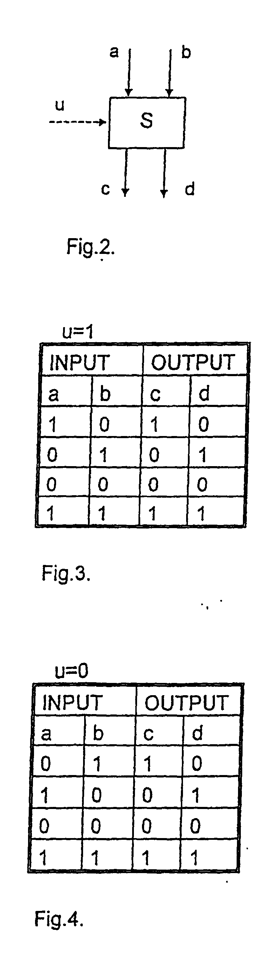

Fig.2 explains the operation of an elementary switch, where u is control signal, a and b are data input signals, c and d are data output signals.

Tables in Figs.3 and 4 show output signal dependence on input and control signals. It will be seen from these tables that when u=1, line a commutes with line c and line b with line d. When u=0, line a commutes with line d and line b with line d. Thus when the control signal is one, no two input bits are permuted while when the control signal is zero, input bits are permuted.

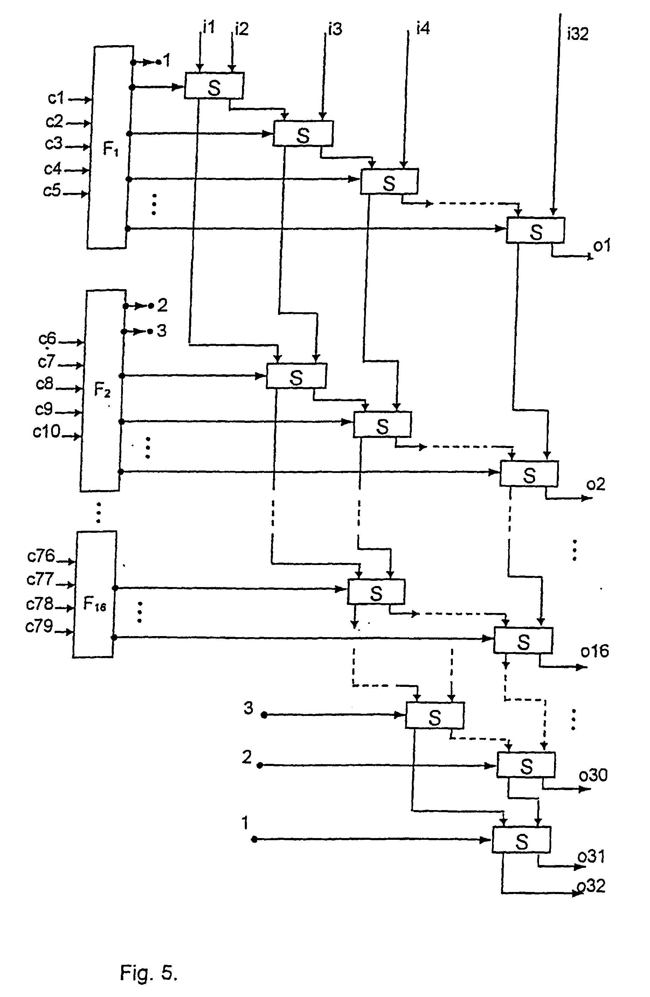

Fig.5 shows a possible embodiment of the controlled permutation block using a set of elementary switches S. This example corresponds to block P having a 32-bit information input and a 79-bit control input. Bits of the current converted subkey are used as information signals. 32 bits of one of subblocks and 47 bits of one of additional subkeys are used as control signals.

The number of possible versions of the permutation operation is equal to the number of possible code combinations at the control input and amounts to 2⁷⁹ for block P having the structure illustrated in Fig.2. This controlled permutation block implements a unique permutation of input bits for each possible value of code combination at the control input the number of which is 2⁷⁹. Outer information inputs of the controlled permutation block are designated i1, i2,..., i32, outer outputs are designated o1, o2,,..., o32, control inputs are designated c1, c2,..., c79. Elementary switches S are connected in such a way as to form an array consisting of 31 lines. In the first line, 31 elementary switches S are connected, in the second line, 30 switches, in the third line, 29, etc. In each next line, the number of elementary switches is reduced by 1. In the lowest, 31^{st}, line 1 elementary switch is connected.

Line numbered j≠31 has 33-j inputs, 33-j outputs and 32-j control inputs. The last (rightmost) output of the j-th line is an outer output of the controlled permutation block, the remaining 32-j outputs of the j-th line are connected to corresponding inputs of the (j+1)-th line The last 31^{st} line has two outputs and both of them are outer outputs of the controlled permutation block. To not more than one control input of each line a unit (u=1) control signal is applied. To meet this requirement, there are provided two-thirty-two-grade decipherers F₁, F₂, ..., F₁₅ and two-sixteen-grade decipherer F₁₆. Decipherers F₁, F₂,..., F₁₅ have five outer control inputs to which a random 5-bit binary code is fed, and 32 outputs. These decipherers generate only at one output a unit signal. A zero signal is set at the remaining 31 outputs. Decipherer F₁₆ has 4 inputs to which an arbitrary 4-bit binary code is supplied, and 16 outputs out of which only at one a value one signal is set. For all decipherers F₁, F₂,..., F₁₅ and F₁₆ each input binary code value sets a uniquely possible output number at which a unit signal (u=1) is set.

A part of outputs of decipherer Fₕ, where h≤15, are connected to the control inputs of the line numbered h (32-h outputs), while a part of outputs are connected to the control inputs of the (32-h)-th line (h outputs). Thus in each line, only on one elementary switch the control signal u=1 is set. The line input connected to the right input of the elementary switch to which the unit control signal is applied, commutes with the outer output of the controlled permutation block corresponding to the given line. When the unit control signal is applied to the leftmost elementary switch, the outer output of the controlled permutation block (block P) is commuted with the leftmost line input. The first line commutes one the outer inputs i1, i2, ..., i32 of block P with the outer output o1 and the remaining 31 outer inputs, with inputs of the second line. The second line commutes one of the remaining 31 of the outer input with the outer output o2, and the remaining 30 outer inputs, with inputs of the 3^{rd} line, etc. Such structure of block P implements the unique permutation of input bits for each binary code value supplied to the 79-bit control input of block P.

The following version of using the controlled permutation block P with the 32-bit information input and 79-bit control input is possible. 32 bits of subblock A and 47 bits of the additional 47-bit subkey Q(2r) may be employed as control signals applied to the 79-bit control input of the controlled permutation block P. In this case, depending on the 47-bit additional subkey, one of 2⁴⁷ different modifications of the bit permutation operation is formed which depends on the input block value. Whereby each modification of this operation includes 2³² different operations of permuting the bits of subkey K₂ᵣ, wherein selecting of a particular permutation operation is determined by the A subblock value. Modification selection is not predetermined since it is defined by the additional subkey Q(2r) which is directly an element of the secret key or depends on the secret key. This additionally enhances resistance of the cryptographic conversion. If the encryption device uses two blocks P having the structure shown in Fig.2, the number of possible modification combinations of the controlled permutation operation set on blocks P depending on additional 47-bit subkeys may be set up to (2⁴⁷)²=2⁹⁴ when using a secret key of 94 bits length.

Due to the simple structure of blocks P, the modern technology of producing integrated circuits enables to readily manufacture cryptographic microprocessors comprising controlled permutation blocks with the input capacity of 32 and 64 bits and providing encryption rate up to 1 Gbit/s and higher.

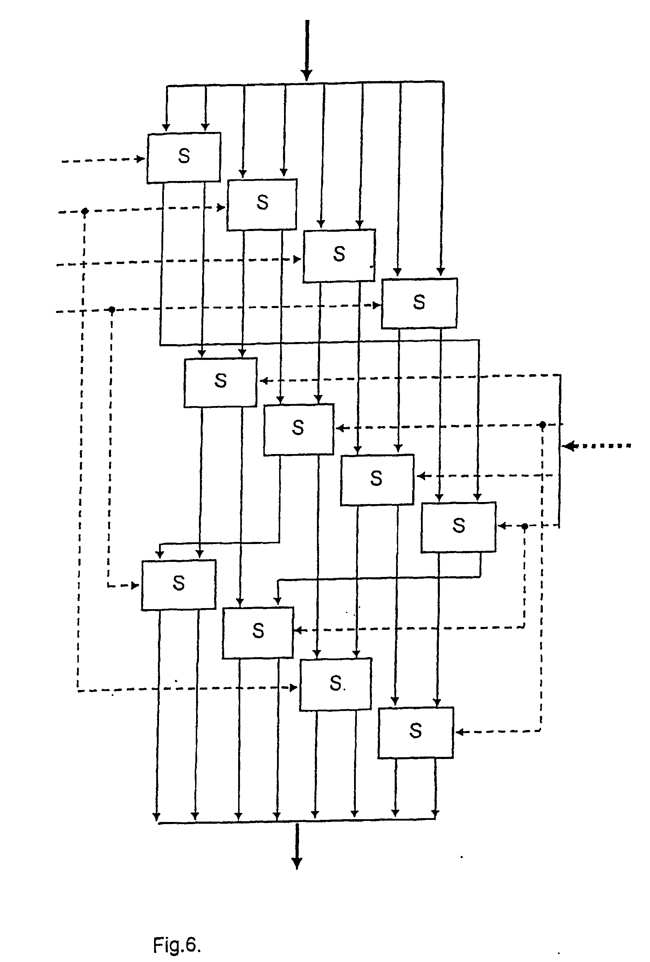

Fig.6, where thin solid lines signify transmission of one subkey bit, demonstrates possible realisation of the controlled permutation block using a set of elementary switches S. This example of the controlled permutation block corresponds to a controlled permutation block. Having an 8-bit input for information signals (subkey bits) and an 8-bit input for control signals (data subblock bits designated by dotted lines similar to those in Fig.1). In a similar way, it is possible to construct an arbitrary controlled permutation block, for example, having a 64-bit input for information signals and a 128-bit input for control signals. When using a controlled permutation block having a 32-bit information input, the number of different permutation is equal to 2³². This means that in encrypting two different data blocks, the possibility of repeating of a certain permutation at a given set equals 2⁻³² while that of repeating permutations at z set steps equals 2^{-32z}. Thus, the set of subkey modified values used to convert each input message is practically unique which ensures high cryptographic resistance of encryption.

When using the simplified structure of the controlled permutation block shown in Fig.6, it is easy to manufacture cryptographic microprocessors comprising controlled permutation blocks with input capacity up to 128 bits. The use of the controlled permutation operation on 128-bit subkeys allows to obtain a higher cryptographic resistance of encoding. The controlled permutation block is a combination electric circuit which provides a high speed of performing the controlled permutations.

### Example 2.

This example explains the use of cyclic offsetting operation depending on subblocks being converted and performed on subkeys. The encryption key is generated in the form of 16 subkeys K₁, K₂, K₃,..., K₃₂, each having a length of 32 bits. An input 64-bit data block is broken down into two 32-bit subblocks A and B. Encrypting of the input block is described by the following algorithm:
1. Set round number counter r=1.
2. Convert subblock B according to the expression: B: =B ⊕ (K₂ᵣ<<<A), where K₂ᵣ<<<A signifies an operation of cyclic offsetting to the left by A bits executed on subkey K₂ᵣ.
3. Convert subblock A according to the expression:
   A: =A ⊗ B,
   where "⊗" is modulo 2³² summation operation.
4. Convert subblock A according to the expression:
   A: =A ⊕ (K ₂ᵣ₋₁<<<B),
   where K ₂ᵣ₋₁<<<B signifies an operation of cycling offsetting to the left by B bits executed on subkey K ₂ᵣ₋₁.
5. Convert subblock B according to the expression:
   B: =B ⊗ A.
6. If r≠16, then increment counter r: =r+1 and move to step 2, otherwise STOP.

The logic pattern of one conversion round is explained in Fig. 1, blocks P₁ and P₂ in this example represent an operating block performing an operation of cycling offsetting bits of corresponding subkeys depending of subblocks being converted. This algorithm is oriented to implementing in the form of a computer program. Modern microprocessors quickly carry out the cyclic offsetting operation depending on the value of a variable stored in one of registers. Due to this fact, the described algorithm, when realised in software, provides an encryption rate of about 40 Mbit/s for a mass-volume microprocessor Pentium/200. When 10 encryption rounds are set, a rate of about 60 Mbit/s is achieved.

### Example 3.

This example explains the use of a substitution operation depending on subblocks being converted and performed on subkeys. For the present example, blocks P₁ and P₂ represent an operating block carrying out a substitution operation depending on appropriate subblocks. By the substitution operation we mean an operation of replacing a binary signal value at the input of operating block P with another binary value (set at the output of the operating block) which is selected depending on the value at the input of block P in accordance with a certain substitution table. Two substitution versions may be implemented:
(1) an n-bit input binary vector is replaced with an n-bit output binary vector, whereby different output binary vectors correspond to different input binary vectors;
(2) an m-bit binary vector is replaced with an n-bit binary vector, where n≥m, whereby both different and the same output binary vectors may correspond to different input binary vectors.

Let us explain setting dependence of the first type substitution operation on a subblock of data being converted. Let us assume that the substitution operations are performed on a binary vectors having an n-bit length, where n is an integer. Then in order to determine a substitution operation of capacity nxn (designation nxn means that a binary vector with a length of n bits is an input for the substitution operation and an output binary vector also has a length of n bits), it is required to use a table containing two lines of numerals:

| | | | | | |
|---|---|---|---|---|---|
| 0 | 1 | 2 | 3 | ... | N-1 |
| α₀ | α₁ | α₂ | α₃ | ... | α_{N-1} |

where N=2ⁿ. In the bottom line of this table there are all possible values of the n-bit block equally once but in an arbitrary order. Proper sequence of locating the numerals in the bottom line determines the specific version of the substitution table and hence also the specific version of the substitution operation carried out using this table. Performing the substitution operation is effected as follows. A numeral is selected in the top line which is equal to the input block value. The value appearing under this numeral in the bottom line is taken to be an output block. Thus, the substitution table may be placed in the computer working memory as a consecutive notation of n-bit computer words located within cells having addresses w₀, w₁, w₂, ..., w_{N-1}. In this case, the value of input binary vector Y serves for computing the address w₀+Y of the word which is taken as an output binary vector. This method of representing of the substitution table requires the use of memory capacity equal to Nn=2ⁿn bits. Let us select the number of substitution tables equal to 2^{L} (the required memory capacity will be in this case 2^{L}Nn bits) and locate the substitution tables uninterruptedly one after another. Let us take the value of address w₀ from the table first n-bit word as the table address with number v. Let the table address with the number v=0 be s. In this case, the substitution table address with any number v is s+vN. If the control binary vector is specified determining the number of the current substitution table as well as the current input binary vector, then the substitution operation is carried out by replacing the current input block with the n-bit word located at the address s+vN+Y, where Y is the value of input binary vector on which the current substitution operation is performed. Using this relation, it is easy to specify selection of the substitution table with number v and perform substitution on the input binary vector with the value Y. In the case under consideration, specifying dependency of substitution tables on the value of control binary vector and performing the substitution operation is effected by the microprocessor very quickly when the appropriate values of parameters L and n are selected, e.g., when L=5 and n=8. When these parameters are selected, in order to locate the substitution tables, 8 kbytes of the working memory are required which is acceptable since modern computers have the working memory capacity more orders higher than this value (from 1 to 64 Mbytes and more).

We will explain specifying dependency of the second type substitution operation on a data subblock by the example of 16x32 substitutions specified using a numbered sequence of 32-bit binary vectors Xⱼ, j=0, 1, 2, ..., 2¹⁶-1. The sequence Xⱼ is assumed to be known and relating to encryption algorithm description. The substitution operation on 16-bit key k is carried out depending on converted subblock b as follows:
(1) calculate number j=(b+k) mod 2¹⁶;
(2) 16-bit binary vector k is replaced with 32-bit binary vector Xⱼ.

Encrypting 64-bit data blocks based on substitution operations performed using the sequence of 32-bit binary vectors Xⱼ (j=0, 1, 2, ..., 2¹⁶-1) on subkeys depending on data subblocks being converted, may be effected, for example, as follows. The encryption key is generated in the form of 16 subkeys K₁, K₂, K₃, ..., K₃₂, each having a length of 16 bits. The input data block is broken down into two 32-bit subblocks A=a₂la₁ and B=b₂lb₁ represented as a concatenation of 16-bit subblocks a₁, a₂, and b₁, b₂, respectively. Encryption of the input block is described by the following algorithm:
1. Set round number counter r=1.
2. Convert subblock B according to the expression:
   B: =B ⊕ F(K₄ᵣ, a₁),
   where F(K₄ᵣ,a₁) signifies the substitution operation on subkey K₄ᵣ depending on subblock a₁.
3. Convert subblock A according to the expression:
   A:= A + B (mod2³²).
4. Convert subblock A according to the expression:
   A:= A ⊕ F(K₄ᵣ₋₁,b₁),
   where F(K ₄ᵣ₋₁,b₁) signifies the substitution operation on subkey K ₄ᵣ₋₁ executed depending on subblock b₁.
5. Convert subblock B according to the expression:
   B:= B + A (mod2³²).
6. Convert subblock B according to the expression:
   B:= B ⊕ F(K₄ᵣ₋₂,a₂).
7. Convert subblock A according to the expression:
   A:= A + B(mod2³²).
8. Convert subblock A according to the expression:
   A:= A ⊕ F(K ₄ᵣ₋₃,b₂).
9. Convert subblock B according to the expression:
   B:= B + A (mod 2³²).
10. If r≠4, then increment counter r: =r+1 and move to step 2, otherwise STOP.

This algorithm uses the known substitution table with 240 kbytes size which constitutes a small part of capacity of modern computer working memory. An operation of extracting binary vectors from the working memory according to predetermined addresses is performed over a small number of machine cycles, due to which the software implementation of the proposed method for block encryption with substitution operations performed on subkeys depending on converted subblocks provides an encryption rate from 20 to 60 Mbit/s (depending on specific implementation) for the mass-volume microprocessor Pentium/200.

### INDUSTRIAL APPLICABILITY

The examples cited demonstrate that the proposed method for block encryption of discrete data is technically feasible and allows to resolve the problem we have defined.

The examples discussed are readily implemented, for example, in specialised microelectronic encryption circuits (Example 1) and in the form of encryption computer software (Examples 2 and 3) and ensure an encryption rate up to 1 Gbit/s and higher (Example 1), when hardware implemented, and up to 60 Mbit/s, when software implemented and using the mass-volume microprocessor Pentium/200 (Examples 2 and 3).

## Claims

1. A method for block encryption of discrete data, comprising generating an encryption key in the form of a set of subkeys, breaking down a data block into N≥2 subblocks and alternate converting said subblocks by performing a dual-locus operation on on the subblock and the subkey, characterised in that prior to carrying out said dual-locus operation on i-th subblock and subkey, a conversion operation is performed on the subkey depending on j-th subblock, where j≠i.

2. A method according to claim 1, characterised in that an operation of permuting subkey bits depending on said j-th subblock is used as the j-th subblock-dependent conversion operation.

3. A method according to claim 1, characterised in that an operation of cyclic offsetting subkey bits depending on said j-th subblock is used as the j-th subblock-dependent conversion operation.

4. A method according to claim 1, characterised in that a substitution operation performed on a subkey depending on said j-th subblock is used as the j-th subblock-dependent conversion operation.
